# EUROPEAN PATENT SPECIFICATION

(11) **EP 2 547 482 B1**
(45) Date of publication and mention of the grant of the patent: **01.07.2015**
(21) Application number: 11708841.9
(22) Date of filing: 15.03.2011
(51) Int. Cl.: B23K 1/20

(54) **A METHOD FOR BRAZING A SURFACE OF A METALLIC SUBSTRATE**
VERFAHREN ZUM HARTLÖTEN EINER OBERFLÄCHE EINES METALLISCHEN SUBSTRATS
PROCÉDÉ DE BRASAGE D'UNE SURFACE DE SUBSTRAT MÉTALLIQUE

(30) Priority: 18.03.2010 EP 10002901
(43) Date of publication of application: 23.01.2013
(73) Proprietor: Siemens Aktiengesellschaft, 80333 München (DE)
(72) Inventor: PIEGERT, Sebastian, 10777 Berlin (DE); REINKENSMEIER, Ingo, 58730 Fröndenberg (DE)
(86) International application number: PCT/EP2011/053897
(87) International publication number: WO 2011/113832

(56) References cited:
- GB-A- 2 144 064
- JP-A- 8 229 819
- US-A- 4 572 939

## Description

The invention relates to brazing a surface of a metallic substrate. More particularly, invention relates to brazing said surface of said metallic substrate including a generally passive metal oxide layer.

Brazing is a process whereby a filler material is heated to its melting temperature and distributed over a surface of a metallic substrate by capillary action. The filler metal is brought slightly above its melting temperature before distributing over said surface. The filler metal wets with said surface of said metallic substrate and is then cooled rapidly to braze the metallic substrate.

The metallic substrate may contain a metal, for example, aluminum or titanium, among others. Generally, when the surface of the metallic substrate is exposed to the atmosphere, the surface reacts with atmosphere to form a passive metal oxide layer (for example, aluminum oxide, titanium oxide, or chromium oxide) on the surface of the metallic substrate. The passive layer prevents a proper wetting of said filler material with said surface of said metallic substrate. This results in an uneven and weak brazing due to lack of flow and wetting of the faying surfaces.

According to a known solution, the surface of the metallic substrate is machined by a hard metal tool by either milling or grinding the surface of said metallic substrate. This removes the passive metal oxide layer from said surface of the metallic substrate, hence making the surface active to wet properly with the filler material. However, disadvantageously, the passive oxide layer is formed quickly when the machined surface is exposed to the atmosphere.

One other commonly known way is to use a filler material having elements like phosphorus, boron and silicon which are reactive to the passive oxide layer to dissolve said oxide layer and make the surface of the metallic substrate active. However, in current brazing techniques, use of these elements in the filler material has considerably been reduced in order to avoid or at least minimize the formation of detrimental brittle phases within the braze joints.

Grit blasting a surface to be bonded to obtain a given roughness is known, see GB-A-2144064. According to US-A-4 572 939, a known method of brazing comprises sand blasting the surfaces with particles of brazing material to clean the surfaces and to embed brazing material therein.

It is an object of the invention to provide an improved technique for brazing a surface of a metallic substrate including a generally passive metal oxide layer, to improve flow and wettability of the braze surface.

The object is achieved by the method according to claim 1.

The underlying idea of the present invention is to improve wettability and flow of the filler material at a surface to be brazed (i.e., a surface of the metallic substrate), by activating braze surface by grit blasting powdered particles of an activating material on the surface. The activating material acts as a catalyst that splits into its constituents at brazing temperature to break up or dissolve the metal oxide layer and thereby allowing wetting of the underlying substrate to a good extent.

According to one embodiment, the method further includes activating said metallic substrate prior to said grit blasting by machining said metallic substrate with a metal tool. Such machining helps to remove excess of said oxide layer before grit blasting the activating materials, thus providing quick activation of said surface.

According to yet another embodiment, for increased reactivity at the brazing temperature, silicon carbide (SiC) is used as the activating material.

According to one exemplary embodiment, the grit blasting of said powdered particles of the activating material on said surface is done at a pressure between 3 bar - 6 bar. Such pressurized grit blasting provides an optimum deposition of the grit particles of the activating material on said surface.

According to one other embodiment, the brazing temperature is kept in the range of 900° C to 1260° C. This helps to provide sufficient heat to the filler material to melt for wetting and providing heat to dissociate the activating material for making said activating material reactive to said passive oxide layer.

According to yet another embodiment, the filler material comprises at least one of boron, silicon and phosphorus to lower melting point of said filler material.

According to another embodiment, the filler material comprises at least one of nickel and iron, as such filler material, for adequate wetting of the surface of the metallic substrate.

According to an exemplary embodiment, the metallic substrate comprises aluminum or titanium or chromium or combinations thereof.

FIG 1 is a flowchart illustrating a method for brazing according to one embodiment of the present invention,

FIG 2 shows a metallic substrate having a metallic oxide layer that may be brazed in accordance with embodiments of the present invention,

FIG 3A shows a perspective view of texture of said surface of said metallic substrate after brazing when the surface of the substrate is not activated by grit blasting, and
FIG 3B shows a perspective view of texture of said surface of said metallic substrate after brazing when the surface of the substrate is activated by grit blasting.

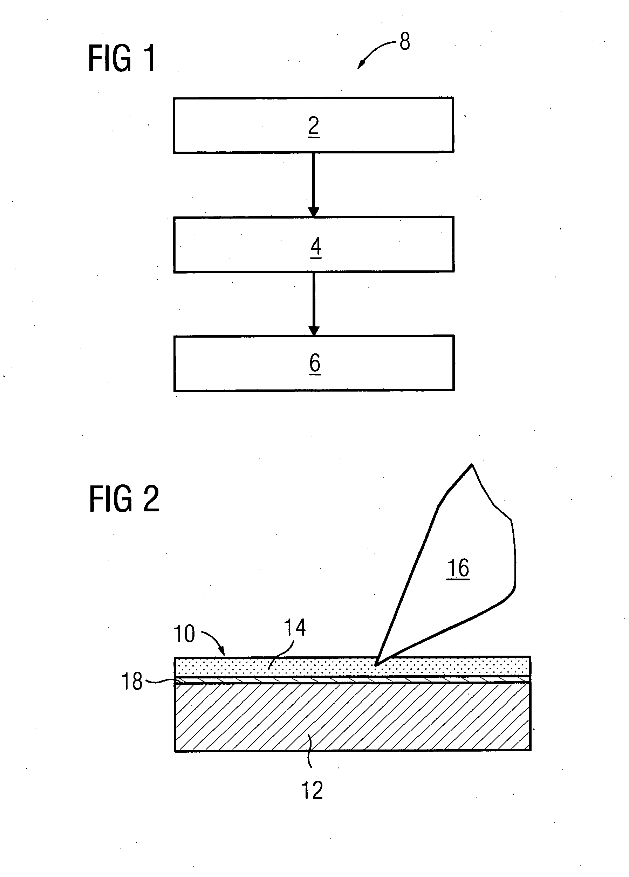

An exemplary brazing method 8 is represented in FIG 1. The brazing method 8 represented in FIG 1 may be used for brazing a surface 10 of a metallic substrate 12 having a generally passive metal oxide layer 18 illustrated in FIG 2.

In general, when said surface 10 of said metallic substrate 12 is exposed to an atmosphere, it leads to a quick formation of a metal oxide layer 18 on the surface 10. For example, if the metallic substrate comprises aluminum and/or titanium, a corresponding aluminum/titanium oxide layer 18 is formed on the surface 10 upon prolonged atmospheric exposure. This layer 18 is generally passive in nature and hence, when the brazing is carried out on said surface 10, the oxide layer 18 restricts proper wetting of said surface 10 the said filler material.

The method 8 exemplified in FIG 1 comprises steps 2, 4 and 6 which, for the sake of understanding, are discussed referring to the illustration in FIG 2. Hence the following discussion includes cross-reference to both FIG 1 and FIG 2.

To activate the surface 10, the method 8 (FIG 1) involves an advantageous step 2, wherein the metallic surface 10 is machined to clean said surface 10 from excess of the generally passive metal oxide layer 18. The machining at step 2 (FIG 1) may be carried out by milling or grinding said surface 10 with a hard metal tool. The hard metal tool may comprise, for example, metallic carbide made from finely divided tantalum, titanium, tungsten, or vanadium mixed with carbon and molten cobalt or nickel. Alternatively, the machining can be done by high speed steels having chromium, tungsten, cobalt or vanadium. In yet another embodiment, machining can be done by any metal tool which remains hard at dull-red heat generated while machining of said surface 10 of metallic substrate 12.

At step 4 of the method 8 (FIG 1), powdered particles 14 of an activating material are grit blasted on the surface 10. The term grit blasting used here refers to surface preparation process before brazing, where particles 14 of activating material are bombarded on to the surface 10 of metallic substrate 12. The activating material is chosen such that during subsequent brazing operation at a brazing temperature, the activating material is split into its constituents and reacts to break up or dissolve the passive metal oxide layer 18, to improve the flow and wettability of the braze surface 10. In a preferred embodiment, .for increased reactivity at the brazing temperature, the activating material is silicon carbide (SiC). Alternately, the activating material may include, for example, aluminum oxide (Al₂O₃), Silicon Oxide (SiO₂), Titanium Oxide (TiO₂) or any other material that is reactive to said oxide layer 18 at the brazing temperature.

In an exemplary embodiment, at step 4 of FIG 1, the particles 14 of said activating material may be propelled at a pressure and blasted on to the surface 10 of said metallic substrate 12. The particles 14 may be propelled using a compressed air. Alternatively, the compressed air can be replaced with any other compressed gas or pressurized fluid, so as to deposit said particles 14 on said surface 10 of the metallic substrate 12. Still alternatively, the pressurized fluid or compressed can also be reactive to oxide metal layer 18 at said brazing temperature in addition to said activating material 16. In a preferred embodiment, the pressure for grit blasting is maintained between 3 - 6 bar, for optimum deposition of the grit particles 14 on the surface 10.

Step 6 of FIG 1 involves wetting the grit blasted surface 10 of the metallic substrate 12 with a filler material 16 at a brazing temperature. The filler material 16 has a generally metallic composition, including, for example nickel and/or iron. However, the filler material 16 may additionally comprise boron or phosphorus or silicon combinations thereof that serve to reduce the melting point and increase the wettability of the filler material. An amount of boron or phosphorus or silicon combinations may be just enough to lower the melting point of said filler material 16, so that said filler material 18 melts at said brazing temperature. The filler material 16 is heated to the brazing temperature enough to melt the filler material and brought into contact with previously grit blasted surface 10. When the hot filler material 16 comes in contact with the surface 10, metal solvent action takes place, wherein the filler material dissolves and penetrates the surface 10. This metal solvent action is referred to as wetting.

The technical effect of the present invention is that at the brazing temperature, the powdered particles 14 of the activating material reacts to break down or dissolve the oxide layer 18 thus aiding the wetting of the surface 10 by the filler material 16, which, upon cooling, forms a brazed surface. In a preferred embodiment, the brazing temperature is maintained between 900° C and 1260° C.

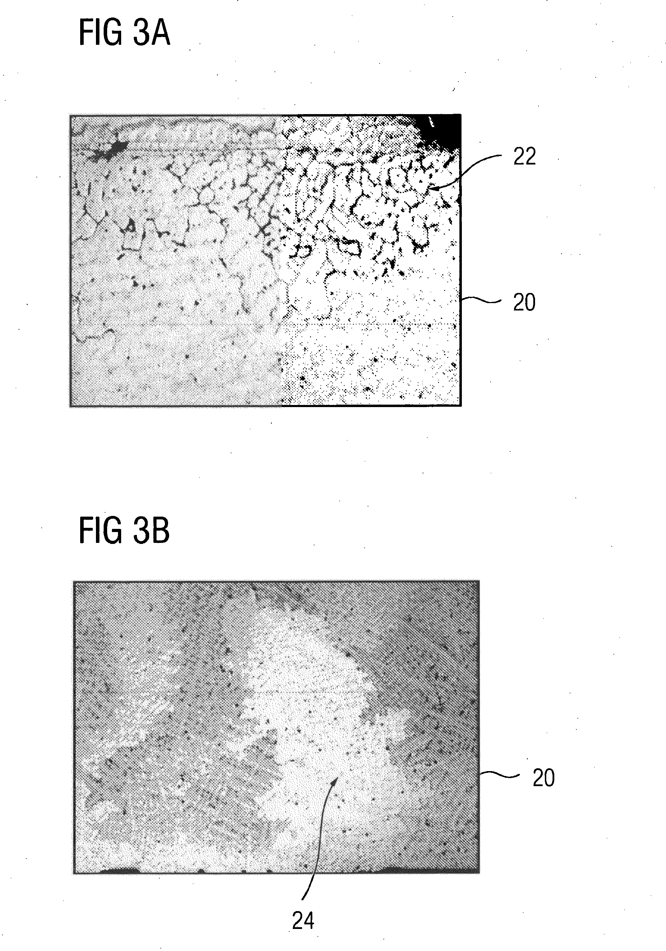

FIG 3A illustrates texture of a brazed surface 20 of said metallic substrate 12 after conventional brazing where prior grit blasting of the surface is not carried out. As shown in FIG 3A, the texture of the brazed surface 10 includes brittle porous structure 22 due to an inadequate wetting of the surface 10. The porous structure 22 reduces the strength and electrical properties of the brazed surface 20.

FIG 3B illustrates texture of brazed surface 20 of said metallic substrate 12 after brazing in accordance with the present invention that includes the step of grit blasting the surface to be brazed as discussed above. As can be seen, the texture of the brazed surface 20 in this case has a reduced porous structure 24, which maintains the strength and electrical properties of the brazed surface. The brazed surface 20 also doesn't have any left over activating material as while wetting all particles of said activating material are utilized to dissolve said oxide layer.

## Claims

1. A method (8) for brazing a surface (10) of a metallic substrate (12) said method (10) comprising:
- grit blasting powdered particles (14) on said surface (10), and
- wetting the grit blasted surface (10) of the metallic substrate (12) with a filler material (16) at a brazing temperature, **characterized in that** said surface (10) includes a generally passive metal oxide layer (18), and said powdered particles are of an activating material, which is reactive with said metal oxide layer (18) at said brazing temperature.

2. The method (8) according to the preceding claim comprising:
- prior to said grit blasting, activating said metallic substrate (12) by machining said metallic substrate (12).

3. The method according to any of the preceding claims, wherein said activating material is silicon carbide (SiC).

4. The method (8) according to any of the preceding claims, wherein said grit blasting of said powdered particles (14) of the activating material on said surface (10) is done at a pressure in the range of 3 bar to 6 bar.

5. The method (8) according to any of the preceding claims, wherein said brazing temperature is in the range of 900° C to 1260°C.

6. The method (8) according to any of the preceding claims, wherein said filler material (16) comprises at least one of boron, silicon and phosphorus or combinations thereof.

7. The method (8) according to any of the preceding claims, wherein said filler material (16) comprises at least one of nickel and iron.

8. The method (8) according to any of the preceding claims, wherein said metallic substrate (12) comprises aluminum or titanium or chromium or combinations thereof.

## Patentansprüche

1. Verfahren (8) zum Hartlöten einer Oberfläche (10) eines metallischen Substrats (12), wobei die Oberfläche (10) eine im Allgemeinen passive Metalloxidschicht (18) aufweist, wobei das Verfahren (10) umfasst:
- Sandstrahlen von pulverisierten Teilchen (14) auf die Oberfläche (10) und
- Benetzen der sandgestrahlten Oberfläche (10) des metallischen Substrats (12) mit einem Füllmaterial (16) bei einer Hartlöttemperatur, **dadurch gekennzeichnet, dass** die Oberfläche (10) eine im Allgemeinen passive Metalloxidschicht (18) aufweist und die pulverisierten Teilchen aus einem Aktivierungsmaterial sind, das mit der Metalloxidschicht (18) bei Hartlöttemperatur reagiert.

2. Verfahren (8) nach dem vorhergehenden Anspruch, umfassend:
- vor dem Sandstrahlen, Aktivieren des metallischen Substrats (12) durch maschinelle Bearbeitung des metallischen Substrats (12).

3. Verfahren nach einem der vorhergehenden Ansprüche, wobei das Aktivierungsmaterial Siliciumcarbid (SiC) ist.

4. Verfahren (8) nach einem der vorhergehenden Ansprüche, wobei das Sandstrahlen der pulverisierten Teilchen (14) des Aktivierungsmaterials auf die Oberfläche (10) bei einem Druck im Bereich von 3 bar bis 6 bar durchgeführt wird.

5. Verfahren (8) nach einem der vorhergehenden Ansprüche, wobei die Hartlöttemperatur im Bereich von 900 °C bis 1260 °C liegt.

6. Verfahren (8) nach einem der vorhergehenden Ansprüche, wobei das Füllmaterial (16) mindestens eines von Bor, Silicium und Phosphor oder Kombinationen davon umfasst.

7. Verfahren (8) nach einem der vorhergehenden Ansprüche, wobei das Füllmaterial (16) mindestens eines von Nickel und Eisen umfasst.

8. Verfahren (8) nach einem der vorhergehenden Ansprüche, wobei das metallische Substrat (12) Aluminium oder Titan oder Chrom oder Kombinationen davon umfasst.

## Revendications

1. Procédé (8) de brasage d'une surface (10) d'un substrat (12) métallique, le procédé (8) comprenant :
- le grenaillage angulaire de particules (14) en poudre sur la surface (10) et
- le mouillage de la surface (10) grenaillée angulairement du substrat (12) métallique par une matière (16) de charge à une température de brasage,
**caractérisé en ce que** la surface (10) comprend une couche (18) d'oxyde métallique, d'une manière générale passive, et les particules en poudre sont en une matière activante, qui est réactive sur la couche (18) d'oxyde métallique à la température de brasage.

2. Procédé (8) suivant la revendication précédente, comprenant :
- avant le grenaillage angulaire, l'activation du substrat (12) métallique par usinage du substrat (12) métallique.

3. Procédé (8) suivant l'une quelconque des revendications précédentes,
dans lequel la matière activante est du carbure de silicium (SiC).

4. Procédé (8) suivant l'une quelconque des revendications précédentes,
dans lequel le grenaillage angulaire des particules (14) en poudre de la matière activante sur la surface (10) est effectué à une pression dans la plage de 3 bar à 6 bar.

5. Procédé (8) suivant l'une quelconque des revendications précédentes,
dans lequel la température de brasage est dans la plage de 900°C à 1260°C.

6. Procédé (8) suivant l'une quelconque des revendications précédentes,
dans lequel la matière (16) de charge comprend au moins l'un du bore, du silicium et du phosphore ou de leurs combinaisons.

7. Procédé (8) suivant l'une quelconque des revendications précédentes,
dans lequel la matière (16) de charge comprend au moins l'un du nickel et du fer.

8. Procédé (8) suivant l'une quelconque des revendications précédentes,
dans lequel le substrat (12) métallique comprend de l'aluminium ou du titane ou du chrome ou leurs combinaisons.
